# EUROPEAN PATENT APPLICATION

(11) **EP 1 072 443 A2**
(43) Date of publication of application: **31.01.2001**
(21) Application number: 00306427.6
(22) Date of filing: 27.07.2000
(51) Int. Cl.: B60C 9/20, B60C 9/22

(54) **Motor-cycle radial tyre**

(30) Priority: 28.07.1999 GB 9917595
(71) Applicant: SUMITOMO RUBBER INDUSTRIES LTD., Hyogo-ken (JP)
(72) Inventor: Watkins, David Robert, Sutton Coldfield, West Midlands B74 3EG (GB); Jackson, Michael, Yardley, Birmingham B25 1RN (GB)
(74) Representative: Stewart, Charles Geoffrey

(57) **Abstract**

A radial motor-cycle tyre (1) comprises a tread (2) reinforced between its edges (3,4) by a breaker assembly and having in its normally inflated fitted condition a camber value C/L of between 0.5 and 0.7, a reinforcing carcass ply (14) of radially disposed cords extending radially inside the breaker assembly and between two bead regions (10,11) and wrapped in each bead region around an annular bead core (12,13) from the axial inside to the outside to form carcass ply turn-ups (15,16) and between the tread edges (3,4) and bead regions (10,11), tyre sidewalls (8,9), characterised in that the tread strip and breaker assembly comprise only two breaker plies (5,7) comprising aromatic polyamide cords oppositely inclined with respect to the circumferential direction of the tyre and a third breaker ply (6) disposed immediately radially outwardly of the two breaker plies, the third breaker ply (6) comprising aromatic polyamide reinforcing cords disposed at an angle of 5° or less to the circumferential direction of the tyre, extending axially in the central region of the tread wherein the third breaker ply (6) has an axial width (S) not less than 50% and not greater than 60% of the tread width (TW) and the tread strip and breaker assembly have no further reinforcement and the tread strip is homogenous between the tread edges.

## Description

This invention relates to radial motor-cycle tyres and in particular but not exclusively to high performance or race motor-cycle tyres.

Such tyres utilise very wide treads which in transverse cross-section are sharply curved to provide for contact with the road surface when the motor-cycle is steeply banked or cambered in cornering. Maintenance of a consistent ground contact area or 'tyre footprint' under all conditions is a major problem in determining general vehicle handling. Furthermore for race motor-cycle tyres of radial construction it is particularly important to provide high cornering power with good stability to maximise cornering speeds under race conditions. In fact it is desirous to be able to still further increase the amount of banking to give even greater cornering prowess.

Present radial motor-cycle race tyres have short sidewalls which extend to the tread edges radially and axially outwardly from the tyre beads. The beads provide engagement to the wheelrim on tapered bead seats. The sidewalls are reinforced by radial carcass plies which when tensioned by the inflation pressure act together with sidewall geometry to provide location of the curved tread regions to withstand cornering forces. The sharply curved tread region of the tyre is specially reinforced by a reinforcing breaker to give the required structural rigidity in the tread section to allow for cornering whilst giving sufficient flexibility to allow localised tread flattening in the ground contact patch for good road grip.

Prior art tyres however, due to their uniform breaker structures, provide performance which has a limited possible degree of banking and so do not give fully optimum stability and lateral grip.

Some specialist constructions in the prior art seek to improve the characteristics by employing a bandage of substantially circumferentially orientated reinforcing cords radially outward of the breaker. For example GB-A-2 283 215 proposes to provide a bandage comprising nylon cords over the full width of the tread whilst EP-A-0 894 646 proposes to provide a bandage of aramid cords in the central tread area.

Whilst such proposals have improved the handling characteristics of this type of tyre, the inventors of the present application have found that even these prior art proposals still give a limit to the degree of banking and uniformity of contact pressure over the whole of the width of the highly curved tread. In particular it is still found that the contact area at the tread edge can be further moved around the tyre thereby improving limit cornering handling and grip.

Therefore the object of the present invention is to further improve the properties of such tyres.

According to one aspect of the present invention a radial motor-cycle tyre comprises a tread reinforced between its edges by a breaker assembly and having in its normally inflated fitted condition a camber value C/L of between 0.5 and 0.7, a reinforcing carcass ply of radially disposed cords extending radially inside the breaker assembly and between two bead regions and wrapped in each bead region around an annular bead core from the axial inside to the outside to form carcass ply turn-ups and between the tread edges and bead regions, tyre sidewalls wherein the tread strip and breaker assembly comprise only two breaker plies comprising aromatic polyamide cords oppositely inclined with respect to the circumferential direction of the tyre, a third breaker ply disposed immediately radially outwardly of the two breaker plies, the third breaker ply comprising aromatic polyamide reinforcing cords disposed at an angle of 5° or less to the circumferential direction of the tyre, extending axially in the central region of the tread and having an axial width greater than 50% but not more than 60% of the tread width and the tread strip and breaker assembly have no further reinforcement and the tread strip compound is homogenous between the tread edges.

By camber value is meant the ratio C/L between the radial distance C from the centre to the edge of the tyre tread and the axial distance L between the centre and edge of the tread.

Preferably the cords of the breaker plies are inclined at between 20 and 35 degrees.

The third breaker ply may comprise a single aromatic polyamide (aramid) cord spirally wound around the tyre across the breaker assembly or it may comprise a plurality of between 2 and 8 cords formed side by side in a tape and wound spirally around the tyre. The cord or cords are preferably embedded in a rubber compound.

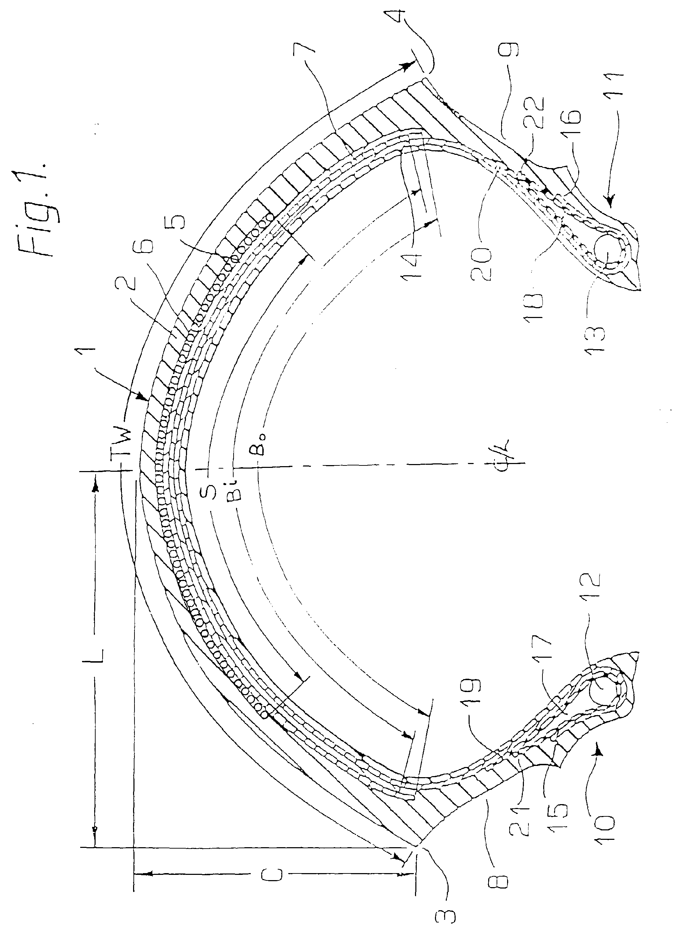

Further aspects of the present invention will become apparent from the description of the following embodiments in conjunction with the attached diagrammatic drawing in which:-
Figure 1 shows in cross-section a 170/60 R17 radial motor-cycle tyre intended for high speed racing.

The tyre 1 of Figure 1 comprises a pair of sidewalls 8 and 9 terminating in bead regions 10 and 11. Each bead region is reinforced by an inextensible annular bead core 12 and 13. Extending between each bead region is a tyre carcass reinforcement ply 14 which is anchored in each bead region by being turned around the respective bead core 12,13 laterally from the inside to the outside to form a ply turn-up 15,16. The carcass reinforcement ply 14 comprises a single ply of nylon tyre fabric laid with the cords substantially radially. Each tread region 10,11 further comprises a hard rubber apex member 17,18 which is anchored to each respective bead core 12,13 and extends taperingly radially outwardly.

The tyre 1 has a camber value of 0.6 and comprises a convex tread region 2, having tread edges 3,4, reinforced by a breaker assembly. The width TW of the tread is 220 mm measured along the outer surface. The breaker assembly comprises two breaker plies 6 and 7 each of which comprises Kevlar (Registered Trade Mark) aramid cord tyre fabric each of 2/165 TEX. The cords in each of the breaker plies 6 and 7 are oppositely inclined to each other at an angle of 25° to the circumferential direction of the tyre. The radially inner breaker ply 7 has a width Bi of 200 mm and is narrower than the radially outer breaker ply 5 which has a width Bo of 220 mm.

Radially outside and immediately adjacent to the main breaker plies in the central region of the tread only is a third breaker ply 6 reinforced by rubber covered single aramid cord of 2/110 TEX. The third breaker ply 6 is disposed centrally about the axial centreline CL of the tyre, and is formed by winding the cord in a spiral manner around the tyre circumference. Formed in this manner the cord of the third breaker ply 6 lies at substantially 0° to the circumferential direction of the tyre.

The third breaker ply 6 has a width S of 120 mm which is substantially 55% of the tread width TW. In accordance with the invention the width S may lie in the range of 50-60% of the tread width TW but must not be >60%.

The remainder of the tread/breaker package comprises only tyre tread compound. No other reinforcement compounds either of fabric, cord or rubber of different stiffness to the tread compound are included.

Whilst the above-described embodiment has a third breaker ply formed by a single rubber coated aramid cord spirally wound around the tyre the third breaker ply may be formed from a spirally wound tape comprising between 2 and 8 cords laid side by side and embedded in rubber. The third breaker ply may also be formed by winding around the circumference of the breaker assembly a strip having a width S and comprising plural aramid cord disposed longitudinally.

The resultant tyres have been found to have enhanced stability of 0° camber and higher contact pressure at the tread edges 3,4 which reduces the propensity of the wheels to slide at high camber angles when the vehicle is cornering at high speed.

## Claims

1. A radial motor-cycle tyre (1) comprising a tread (2) reinforced between its edges (3,4) by a breaker assembly and having in its normally inflated fitted condition a camber value C/L of between 0.5 and 0.7, a reinforcing carcass ply (14) of radially disposed cords extending radially inside the breaker assembly and between two bead regions (10,11) and wrapped in each bead region around an annular bead core (12,13) from the axial inside to the outside to form carcass ply turn-ups (15,16) and between the tread edges (3,4) and bead regions (10,11), tyre sidewalls (8,9) wherein the tread strip and breaker assembly comprise only two breaker plies (5,7) comprising aromatic polyamide cords oppositely inclined with respect to the circumferential direction of the tyre, a third breaker ply (6) is disposed immediately radially outwardly of the two breaker plies, the third breaker ply (6) comprising aromatic polyamide reinforcing cords disposed at an angle of 5° or less to the circumferential direction of the tyre, extending axially in the central region of the tread wherein the third breaker ply (6) has an axial width (S) not less than 50% and not greater than 60% of the tread width (TW) and the tread strip and breaker assembly have no further reinforcement and the tread strip is homogenous between the tread edges.

2. A radial motor-cycle tyre according to claim 1, characterised in that the third breaker ply has an axial width (S) of 55% of the tread width.

3. A motor-cycle radial tyre according to claim 1 or 2, characterised in that the cords of the breaker plies (5,7) are inclined at 20 to 35 degrees with respect to the circumferential direction of the tyre.

4. A motor-cycle tyre according to claim 3, characterised in that the cords of the breaker plies (5,7) are inclined at 25 degrees with respect to the circumferential direction of the tyre.

5. A motor-cycle radial tyre according to any of claims 1 to 4, characterised in that the third breaker ply (6) comprises a single cord spirally wrapped around the circumference of the tyre.

6. A motor-cycle radial tyre according to any of claims 1 to 4, characterised in that the third breaker ply (6) comprises a plurality of between 2 and 8 cords laid side by side in the form of a tape which is spirally wound around the tyre.

7. A motor-cycle tyre according to claims 1 to 4, characterised in that the third breaker ply (6) comprises a single wrap of a strip of full width S comprising plural cords disposed longitudinally.

8. A motor-cycle radial tyre according to any of claims 1 to 7, characterised in that the radially outermost breaker ply (5) is wider than the radially innermost breaker ply (7).

9. A motor-cycle tyre according to any of claims 1 to 8, characterised in that the widest breaker ply is substantially the same width as the tread.

10. A motor-cycle radial tyre according to any of claims 1 to 9, characterised in that the third breaker ply (6) comprises cord reinforcement embedded in rubber.
